# EUROPÄISCHE PATENTANMELDUNG

(11) **EP 2 482 021 A2**
(43) Veröffentlichungstag der Anmeldung: **01.08.2012**
(21) Anmeldenummer: 12153391.3
(22) Anmeldetag: 31.01.2012
(51) Int. Cl.: F28D 20/02

(54) **Verfahren zur Bestimmung des Ladezustandes eines Latentwärmespeichers und Latentwärmespeicher mit einer derartigen Ladezustandsanzeige**

(30) Priorität: 01.02.2011 DE 102011003441
(71) Anmelder: ZAE Bayern Bayerisches Zentrum für angewandte Energieforschung e.V., 85748 Garching (DE)
(72) Erfinder: Hiebler, Stefan, 82467 Garmisch-Partenkirchen (DE); Schweigler, Christian, 82178 Puchheim (DE); Helm, Martin, 80797 München (DE); Himpel, Michael, 80686 München (DE); Hagel, Kilian, 81735 München (DE)
(74) Vertreter: Winter, Brandl, Fürniss, Hübner, Röss, Kaiser, Polte - Partnerschaft

(57) **Zusammenfassung**

Es wird ein einfaches Verfahren zur Bestimmung des Ladezustandes eines Latentwärmespeichers sowie eine Latentwärmespeicher mit einer derartigen Ladezustandsanzeige angegeben. Während des Phasenwechsels des Latentwärmespeichermaterials (3) ändert sich die Dichte des Materials. Diese Volumenänderung kann detektiert werden und daraus der Anteil an geschmolzenem Latentwärmespeichermaterial bestimmt und darüber der Ladezustand des Speichers ermittelt werden. Erfindungsgemäß wird die Volumenänderung indirekt über die Bestimmung des Volumens des Gasraums (6) durchgeführt, der zur Pufferung der Volumenänderung im Speicher vorhanden ist. Dazu wird dem Gasraum (6) eine Messgasmenge zu- bzw. abgeführt und die dabei auftretende Druckänderung bestimmt. Diese ist ein Maß für den Ladezustand des Latentwärmespeichers. Der Kern der Erfindung besteht darin, dass die Druckänderung im Gasraum (6) aktiv erzeugt wird. Dadurch kann auf eine absolut dichte Ausführung des Speicherbehälters (5) verzichtet werden. Die sich einstellende Druckänderung stellt ein Maß für den Ladezustand des Latentwärmespeichers dar. Diese Abhängigkeit kann auf den Wärmeinhalt des Speichers kalibriert werden.

## Beschreibung

Die Erfindung betrifft ein Verfahren zur Bestimmung des Ladezustandes eines Latentwärmespeichers nach Anspruch 1 und einen Latentwärmespeicher mit einer derartigen Ladezustandsanzeige nach Anspruch 7.

### [Stand der Technik]

In sensiblen Wärmespeichern kann der Ladezustand des Speichers einfach über eine Messung der Temperatur des Speichermediums gemessen werden, da mit zunehmendem Energieinhalt die Temperatur des Speichers ansteigt. Bei Latentwärmespeichern ändert sich die Temperatur des Speichermediums während des Phasenübergangs nicht bzw. nur sehr gering. Da dieser Phasenübergang den eigentlichen Speichervorgang darstellt und die Energiespeicherung im Wesentlichen innerhalb eines sehr begrenzten Temperaturintervalls erfolgt, kann eine Temperaturmessung nicht zur Messung des Ladezustandes des Speichers verwendet werden. Eine Temperaturmessung kann nur zu Detektion des Zustands der kompletten Ladung bzw. Entladung des Speichers herangezogen werden (DE102006007863A1). Bei Eisspeichern, einer Sonderform eines Latentwärmespeichers, ist die Messung des Ladezustands über den Füllstand des Behälters mit Wasser Stand der Technik. Dies wird hauptsächlich mit Drucksensoren, die den hydrostatischen Druck der Wassersäule messen, durchgeführt. Dazu muss die Druckmessung im flüssigen Wasser durchgeführt werden und sichergestellt sein, dass der Drucksensor die hydrostatische Höhe erfassen kann und nicht durch festes Eis blockiert wird. Dies ist vor allem deshalb möglich, da Eisspeicher Kälte speichern und deshalb die Umgebungstemperatur normalerweise oberhalb der Schmelztemperatur von Wasser (0°C) liegt. Dies führt dazu, dass das Wasser am Rande des Speichers flüssig vorliegt. Ebenso zeigt Wasser beim Schmelzen eine Volumenkontraktion, wodurch das feste Eis eine niedrigere Dichte als das flüssige Wasser aufweist und das Eis somit auf dem Wasser schwimmt. Beides führt dazu, dass die Drucksensoren einfach in die Behälterwand eingebaut werden können.

Bei Wärmespeichern ist die Umgebungstemperatur üblicherweise deutlich unter der Umwandlungstemperatur des Latentwärmespeichermaterials. Dies führt dazu, dass aufgrund von Wärmeverlusten an die Umgebung das Speichermaterial an den Behälterwänden fest vorliegt. Ebenso weisen fast alle Latentwärmespeichermaterialien im flüssigen Zustand eine niedrigere Dichte als im festen Zustand auf. Somit sinkt das feste Speichermaterial zu Boden. Beides erschwert die Messung des hydrostatischen Drucks signifikant, so dass diese Methode bei den meisten Latentwärmespeichern nicht wirtschaftlich umgesetzt werden kann.

Die Verwendung eines gasdichten Speichers und die Messung des Druckanstiegs während des Phasenwechsels, wie es z.B. von Laing (DE000003227322A1) bzw. Wilo (DE000019615506A1) vorgeschlagen wird, erfordert ein großes Gaspuffer-Volumen, hohen apparativen Aufwand bzw. einen sehr druckstabilen Behälter. Dies erhöht die Kosten des Speichers signifikant. Auch aus der JP 56-027887 A und der JP 11044494 A ist es bekannt den Ladezustand eines Latentwärmespeichers über den Druck in dem Gasvolumen über dem Latentwärmespeichermaterial zu bestimmen. Bei der JP 11044494 A wird über eine Gaszuleitung Inertgas in den Gasraum über dem Latentwärmespeichermaterial zugeführt. Die Messung der Volumenausdehnung über das Verdrängen einer Flüssigkeit die über dem Latentwärmespeichermaterial steht und sich nicht mit diesem mischt, erfordert auch einen relativ hohen apparativen Aufwand und entsprechenden Platz für ein Auffanggefäß. Dies wird z.B. von Pomerenke (DE000010108152A1 und DE000020020814U1) vorgeschlagen. Ladezustandsanzeigen, wie sie von Rubitherm (DE000010058938A1), BMW (DE000010235581 C1) bzw. Hegele (DE000019745794A1) vorgeschlagen werden, sind nur für sehr spezielle Speicheraufbauten tauglich und können nicht einfach auf andere Speicheranordnungen übertragen werden.

### [Aufgabe der Erfindung]

Aufgabe der vorliegenden Erfindung ist es daher ein einfacheres und damit kostengünstigeres Verfahren zur Bestimmung des Ladezustandes eines Latentwärmespeichers anzugeben. Weiter ist es Aufgabe der vorliegenden Erfindung einen Latentwärmespeicher mit einer derartigen Ladeanzeige anzugeben.

### [Lösung]

Die Lösung dieser Aufgabe erfolgt durch die Merkmale des Anspruches 1 bzw. 7.

Während des Phasenwechsels des Latentwärmespeichermaterials (englisch: Phase Change Material, kurz: PCM) ändert sich die Dichte des Materials. Diese Volumenänderung kann detektiert werden und daraus der Anteil an geschmolzenem Latentwärmespeichermaterial bestimmt und darüber der Ladezustand des Speichers ermittelt werden. Erfindungsgemäß wird die Volumenänderung indirekt über die Bestimmung des Volumens des Gasraums durchgeführt, der zur Pufferung der Volumenänderung im Speicher vorhanden ist. Dazu wird dem Gasraum eine Messgasmenge zu- bzw. abgeführt und die dabei auftretende Druckänderung bestimmt. Diese ist ein Maß für den Ladezustand des Latentwärmespeichers.

Der Kern der Erfindung besteht darin, dass die Druckänderung im Gasraum aktiv erzeugt wird. Dadurch kann auf eine absolut dichte Ausführung des Speicherbehälters verzichtet werden. Die sich einstellende Druckänderung stellt ein Maß für den Ladezustand des Latentwärmespeichers dar. Diese Abhängigkeit kann auf den Wärmeinhalt des Speichers kalibriert werden. Eine Kalibrierung der Anzeige kann evtl. auch wiederholt automatisch dadurch erfolgen, dass die Zustände "leer" bzw. "voll" über eine Temperaturmessung im Speicher bestimmt werden. Dies ist möglich, da sich die Temperaturen des Speichers nach Vollendung des Phasenübergangs wieder leicht messbar ändern und der Großteil der Speicherkapazität des Speichers auf der Übergangsenthalpie des Phasenwechsels innerhalb eines sehr engen Temperaturbereichs beruht. Mit Kenntnis dieser Extremwerte kann die Angabe und Anzeige des Wärmeinhalts des Speichers zwischen den Extremwerten "beladen" und "entladen" (d.h. "voll" bzw. "leer") über Interpolation kalibriert werden, da der Verlauf des Zusammenhangs von thermischem Speicherinhalt und freiem Gasvolumen im Speicherbehälter vorab bestimmt werden kann. In vielen Fällen wird eine lineare Interpolation ausreichend sein, da die Volumenänderung in guter Näherung proportional zur Menge des bereits geschmolzenen Materials ist. Abweichungen von diesem linearen Zusammenhang zwischen der Aussage über den thermischen Inhalt und das Ergebnis der Druckmessung treten z.B. durch Leckagen oder nicht linearen Verlauf der Kennlinie der verwendeten Luftpumpe auf. Zudem besteht ein geringer Einfluss der unterschiedlichen Wärmeausdehnung des Latentspeichermaterials im flüssigen und festen Zustand.

Für die Funktion reicht ein geringer Über- bzw. Unterdruck von z.B. 10 mbar aus, so dass der Behälter des Speichers nur geringen zusätzlichen Druckanforderungen genügen muss. Anschließend wird wieder ein Druckausgleich mit der Umgebung hergestellt. Somit kann der Speicher praktisch drucklos betrieben werden.

Dabei muss der Speicherbehälter nur geringe Anforderungen an Gasdichtigkeit erfüllen. Der Speicher wird nur kurzzeitig mit einem geringen Differenzdruck zur Umgebung beaufschlagt, wobei dem Speicher dabei kontinuierlich ein Gasstrom zu- bzw. abgeführt wird. Zeigt der Speicher eine Leckage bezüglich des Gases, resultiert dies lediglich in einem geringeren effektiven Gasstrom, der den Druck im Speicher ändert. Solange die Leckage nicht zu groß wird und sich nicht wesentlich verändert, schränkt sie die Funktion der Ladezustandsanzeige nicht ein.

Eine Leckage ist für den Speicher insofern sinnvoll, damit sich im Speicher während des gesamten Schmelzvorganges kein Überdruck aufbaut. Diese Leckage kann evtl. auch gesteuert ausgeführt werden. Sie ist dann normalerweise offen, nur wenn der Ladezustand ermittelt wird, ist sie geschlossen.

Weiterhin ist eine, gegenüber der Umgebung bzgl. Gasaustausch abgeschlossene Variante denkbar - Anspruch 2. Hierzu wird das Gas nicht von extern zu- bzw. abgeführt, sondern aus bzw. in ein Gefäß, das mit dem Gasraum verbunden ist, gepumpt. Auch so tritt eine vom Ladezustand des Speichers abhängige Druckänderung auf.

Das hier vorgeschlagene Verfahren ist bei einer Vielzahl von Latentwärmespeicherkonstruktionen einsetzbar. Vor allem bei komplexen Strukturen der Wärmetauscheinrichtungen ist es von Vorteil. Diese Vorrichtung kann ebenso in modularen Latentwärmespeichern, d.h. Speichern, die aus mehreren einzelnen Speicher zusammengesetzt sind, verwendet werden. Dabei können alle bzw. nur wenige repräsentative Behälter an eine Gasversorgung angeschlossen werden oder alle bzw. einige wenige repräsentative Behälter über getrennte Ladezustandsanzeigen vermessen werden.

Bei Speichern, die aus einer Vielzahl von kleinen flexiblen Modulen bestehen, kann das Verfahren im umgebenden Behälter angewandt werden - Anspruch 10.

Gemäß der vorteilhaften Ausgestaltung der Erfindung nach Anspruch 13 ist eine Durchmischungsvorrichtung vorgesehen, wie sie aus der DE 102008029072 A1 bekannt ist. Mit einer solchen Durchmischungsvorrichtung wird mittels einer Gaspumpe Gas in den unteren Bereich des Speicherbehälters eingepumpt und dieses Gas perlt aus einer Ausströmvorrichtung aus und durchmischt das zumindest teilweise flüssige Latentwärmespeichermaterial. Auf diese Weise werden Entmischungsvorgänge in dem Latentwärmespeichermaterial verhindert oder zumindest reduziert. Hinsichtlich weiterer Details wird auf die DE 102008029072 A1 vollinhaltlich Bezug genommen.

Vorzugsweise ist die für diese Durchmischungsvorrichtung vorgesehene Gaspumpe gleichzeitig die Messgaspumpe der Gaszufuhr- und Gasabfuhreinrichtung, so dass eine Gaspumpe eingespart wird.

Die übrigen Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung bevorzugter Ausführungsformen anhand der Zeichnung.

### [Ausführungsbeispiel 1]

Speicher mit Wärmetauscher und Messvorrichtung.

### Abb. 1

### [Ausführungsbeispiel 2]

Modularer Speicher, wobei alle oder mindestens ein repräsentativer Teilspeicher über eine separate oder zentrale Pumpe gemessen wird.

### Abb. 2

### [Ausführungsbeispiel 3]

Modularer Speicher, wobei die einzelnen Teilspeicher über ein Verbindungsleitung über eine zentrale Messvorrichtung gemessen werden.

### Abb. 3

### [Ausführungsbeispiel 4]

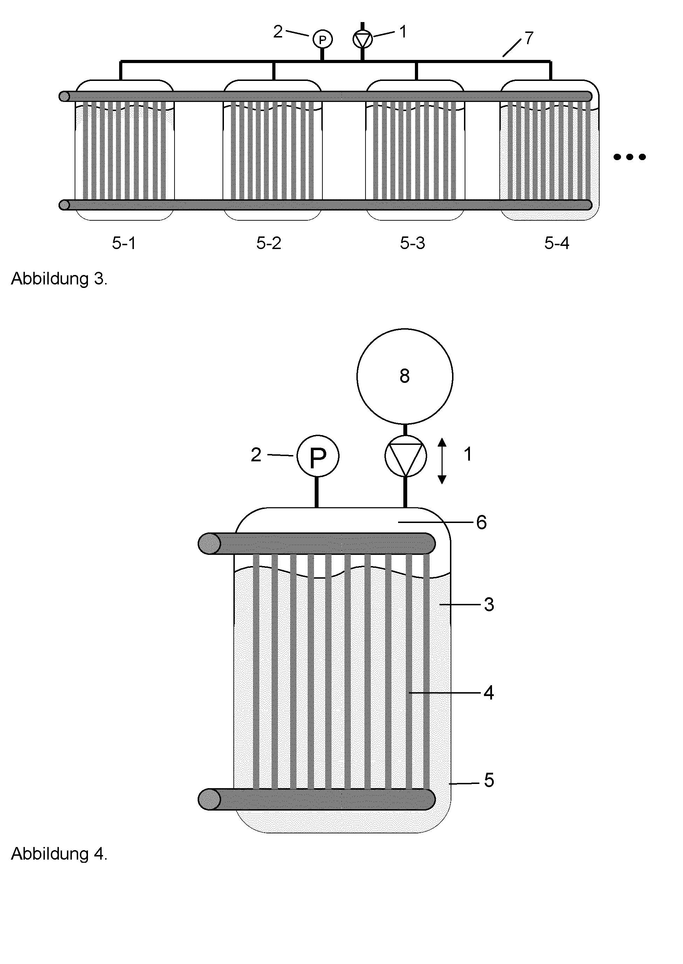

Geschlossene Ausführung durch Umpumpen von Gas in/aus einem Messgasbehälter. Abb. 4

### [Ausführungsbeispiel 5]

Speicher mit Wärmetauscher und Messvorrichtung und zusätzlicher aktiv gesteuerten oder passiver Leckage

### Abb. 5

### [Ausführungsbeispiel 6]

Speicher mit flexible PCM-Behälter oder formstabiles PCM (Zu und Abgang müssen während der Messung evtl. kurzzeitig geschlossen werden)

### Abb. 6

### [Ausführungsbeispiel 7]

Speicher mit Slurry (Zu und Abgang müssen während der Messung evtl. kurzzeitig geschlossen werden)

### Abb. 7

### [Ausführungsbeispiel 8]

Ladezustandsmessung und Durchmischungsvorrichtung, um

Separationserscheinungen im Latentwärmespeichermaterial zu verringern, sind miteinander kombiniert.

### Abb. 8

### [Bezugszeichenliste]

1 Messgaspumpe
2 Druckmessgerät
3 Latentwärmespeichermaterial PCM
4 Wärmetauschereinrichtung zur Ein- bzw. Ausspeicherung der Wärme
5 Speicherbehälter
6 Gasraum zur Aufnahme der Volumenänderung des Speichermaterials
7 Druckgasleitung
8 Gas-Behälter
9 aktiv gesteuerte oder passive Leckage
10 flexible mit PCM gefüllte Behälter oder formstabiles PCM
11 Haltemechanismus
12 Ventile
13 Wärmeträgerfluid (z. B. Luft)
14 PCM-Slurry (pumpfähiges PCM)
15 externer Kreislauf, Wärmetauscher oder Apparat
16 Ausströmvorrichtung
17 Luftblasen

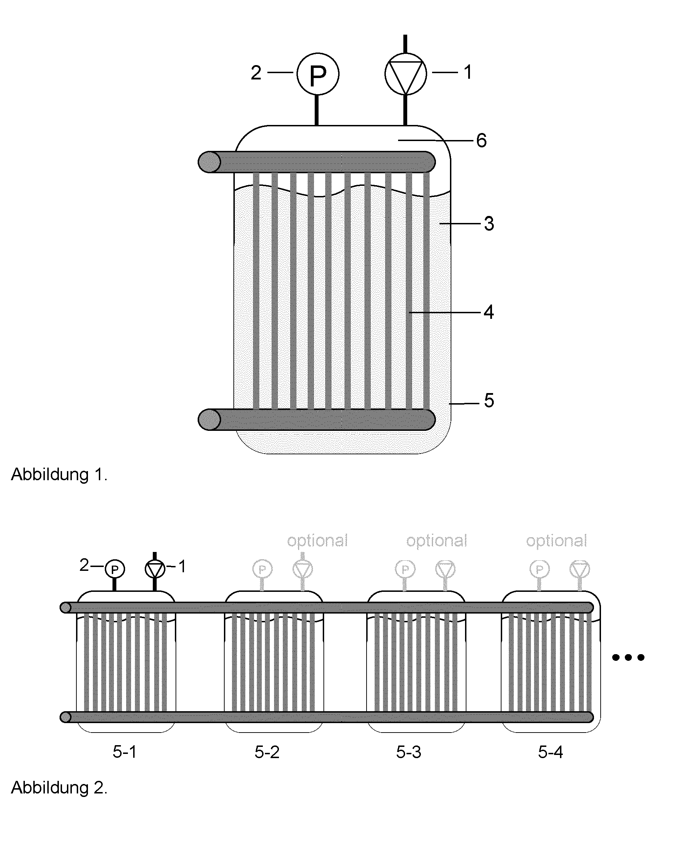

Abb. 1 zeigt ein erstes Ausführungsbeispiel der vorliegenden Erfindung. Ein Speicherbehälter 5 ist bis zu einem gewissen Grad mit PCM 3 gefüllt. Über dem PCM 3 ist in dem Speicherbehälter 5 ein Gasraum 6 ausgebildet, der die Volumenänderung des PCM 3 bei unterschiedlichen Ladezuständen aufnehmen kann. In das PCM 3 taucht eine Wärmetauschereinrichtung 4 ein, mittels der Wärme von außerhalb des Speicherbehälters 5 in das PCM 3 eingekoppelt und aus diesem wieder nach außen abgeführt werden kann. In den Gasraum 6 führt eine Messgaspumpe 1 mittels der eine definierte Gasmenge, vorzugsweise Luft, in den Gasraum 6 eingebracht werden kann. Der Druck in dem Gasraum 6 wird über ein Druckmessgerät 2 erfasst. Als Messgaspumpe 1 wird eine Schwinganker-Membran-Pumpe Thomas 106 verwendet, die einen maximalen Volumenstrom von 0,95 I/min erzeugt.

Zunächst muss das Gasvolumen im Gasraum 6 im vollständig beladenen (ca. 200 I) und im vollständig entleerten Zustand (ca. 100 I) bestimmt werden, so dass die notwendigen Kalibrierungsdaten bereitstehen. Die jeweilige Messung des aktuellen Ladezustandes des Latentwärmespeichers erfolgt durch Zufuhr einer definierten Messgasmenge in den Gasraum 6. Hierzu wird die Messgaspumpe 1 solange aktiviert und Messgas in den Gasraum 6 gepumpt, bis das Druckmessgerät 2 einen vorbestimmten Druck anzeigt. Der vorbestimmte Druck beträgt z. B. 10 mbar, maximal 270 mbar. Der vorbestimmte Druck liegt ca. 10 mbar über dem Druck im Gasraum 6 vor Zuführung der Messgasmenge. Aufgrund der Zeitspanne, während der die Messgaspumpe 1 läuft, und der Fördercharakteristik der Messgaspumpe 1 wird die in den Gasraum 6 eingebrachte Messgasmenge bestimmt. Diese so bestimmte Messgasmenge wird in Relation zu einer analogen Messung im vollständig beladenen und im vollständig entladenen Zustand gesetzt und daraus die Volumenänderung ermittelt. Diese Volumenänderung hängt von dem jeweiligen Ladezustand ab und ist somit ein Maß für den aktuellen Ladezustand des Latentwärmespeichers.

Abb. 2 zeigt ein zweites Ausführungsbeispiel, das sich von Ausführungsbeispiel 1 dadurch unterscheidet, dass eine Mehrzahl von Speicherbehältern 5-1, 5-2, 5-3, 5-4, ... hinsichtlich Wärmetauschereinrichtung 4 verschaltet sind. Jeder der einzelnen Speicherbehälter 5-i ist mit einer Messgaspumpe 1 und einem Druckmessgerät 2 versehen. Dadurch kann jeder einzelne Teilspeicher nach oben beschriebenem Verfahren vermessen und damit der Ladezustand der einzelnen und damit des gesamten Speichers ermittelt werden.

Im Falle einer parallelen Verschaltung baugleicher Teilspeicher hinsichtlich der Wärmetauschereinrichtung 4 kann auf die Vermessung aller Speicher verzichtet werden, da in alle Speicher zeitgleich die gleiche Wärmemenge ein bzw. ausgekoppelt wird. Somit reicht die Messung eines repräsentativen Teilspeichers aus, um den Ladezustand des gesamten Speichers zu bestimmen.

Abb. 3 zeigt ein drittes Ausführungsbeispiel, das sich von Ausführungsbeispiel 1 dadurch unterscheidet, dass eine Mehrzahl von Speicherbehältern 5-1, 5-2, 5-3, 5-4, ... hinsichtlich ihrer Wärmetauschereinrichtung 4 verschaltet sind. Der Unterschied zu Ausführungsbeispiel 2 ergibt sich daraus, dass die Gasräume 6 der einzelnen Teilspeicher über einen gasdichte Druckgasleitung 7 verbunden werden. Somit ergibt sich ein zusammenhängender Gasraum, dessen Volumen nach obigen Verfahren vermessen und daraus wieder der Ladezustand des Gesamtspeichers ermittelt werden kann.

Abb. 4 zeigt ein viertes Ausführungsbeispiel, das sich von Ausführungsbeispiel 1 dadurch unterscheidet, dass die Messgaspumpe 2 nicht Gas aus der Umgebung in den Speicher pumpt, sondern das Gas aus einem Gasbehälter 8 entnimmt und damit die Druckänderung im Speicher erzeugt. Nach Beendigung der Messung wird zwischen dem Gasraum 6 und dem Gasbehälter 8 wieder ein Druckausgleich hergestellt. Dieses Ausführungsbeispiel stellt ein gegen die Umgebung hermetisch abgeschlossenes System dar, sodass keine Materie in das Speichersystem ein bzw. ausgetragen werden kann und damit z.B. die Konzentration der Bestandteile des PCM verändert werden kann. Dieser hermetische Abschluss des Speichers ist auch auf die anderen vorgeschlagenen Ausführungsbeispiele anwendbar.

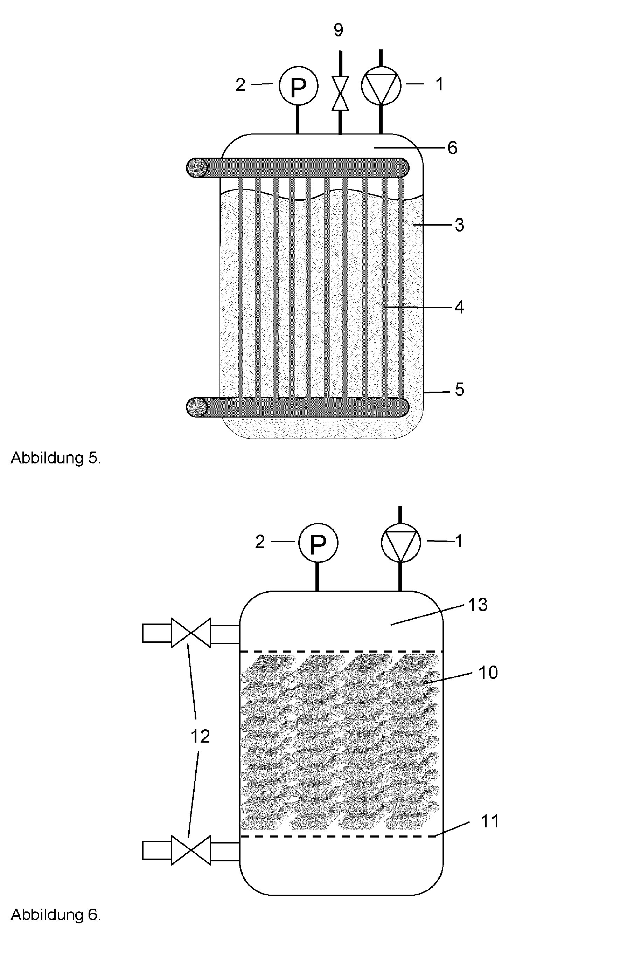

Abb. 5 zeigt ein fünftes Ausführungsbeispiel, das sich von Ausführungsbeispiel 1 dadurch unterscheidet, dass zusätzlich eine Leckage 9 zwischen dem Gasraum 6 und der Umgebung vorhanden ist. Diese Leckage 9 dient dazu, nach der Messung einen Druckausgleich zwischen Gasraum 6 und Umgebung herzustellen. Solange die Leckage 9 klein im Vergleich zu dem durch die Messgaspumpe 1 zugeführten Gasstrom ist, kann diese passiv ausgeführt sein. Eine aktive Steuerung der Leckage über ein Ventil erlaubt einen schnellen Druckausgleich mit der Umgebung, da die Leckage im geöffneten Zustand wesentlich höher sein kann.

Abb. 6 zeigt ein sechstes Ausführungsbeispiel, das sich von Ausführungsbeispiel 1 dadurch unterscheidet, dass sich das PCM in einzelnen flexiblen Behältern befindet bzw. aus Blöcken aus formstabilen PCM 10 besteht. Diese flexiblen Behälter oder Blöcke 10 sind über einen Haltemechanismus 11 im äußeren Speicherbehälter 5 fixiert. Durch den Behälter wird ein Wärmeträgerfluid (z. B. Luft) 13 gepumpt und über die Oberfläche der flexiblen PCM-Behälter bzw. -Blöcke 10, die als Wärmetauscherfläche genutzt wird, wird Wärme in bzw. aus dem PCM ein- bzw. ausgekoppelt. Für den oben beschriebenen Messvorgang müssen eventuell die Ein- und Ausströmöffnungen des Speicherbehälters 5 für das Wärmeträgerfluid 13 über Ventile geschlossen werden.

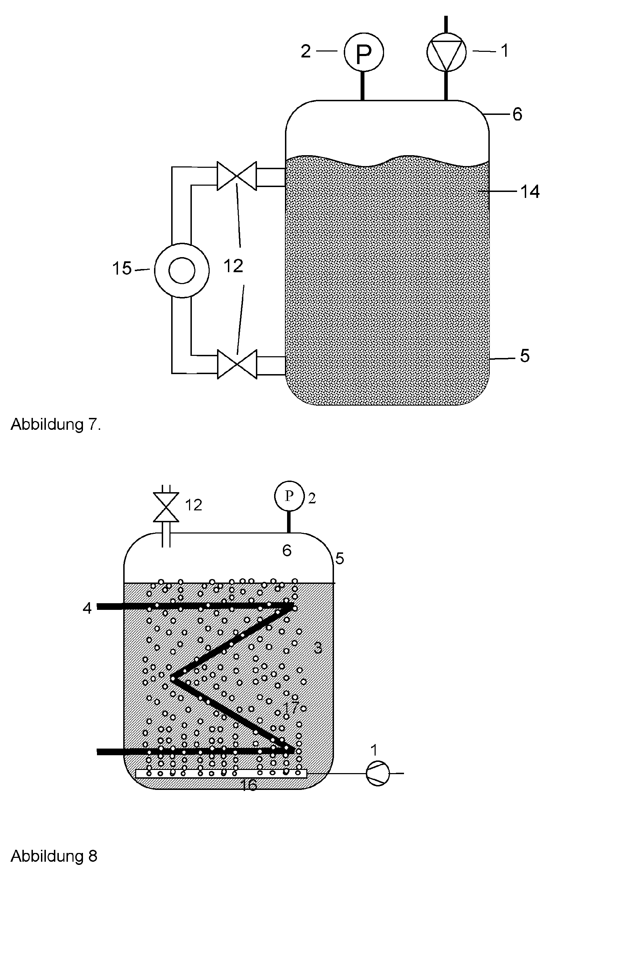

Abb. 7 zeigt ein siebtes Ausführungsbeispiel, das sich von Ausführungsbeispiel 1 dadurch unterscheidet, dass das PCM ein Slurry 14 bildet. Dieses Slurry 14 ist pumpfähig und wird in einem externen Wärmetauscher/Apparat 15 mit Wärme be- bzw. entladen. Auch hier tritt eine Volumenänderung des Materials abhängig vom Ladezustand ein. Diese Volumenänderung kann nach dem oben genannten Verfahren gemessen und damit der Ladezustand bestimmt werden. Dazu muss der externe Kreislauf 15 entweder geschlossen sein oder sich das in diesem Kreislauf befindliche PCM-Slurry-Volumen im Vergleich zur Volumenänderung bzgl. des Ladezustandes des gesamten Speichers nur geringfügig ändern. Falls es sich um einen geschlossenen Kreislauf 15 handelt kann der Ladezustand direkt gemessen werden, ansonsten müssen die Ein- und Ausgänge für das PCM-Slurry 14 für die Messung kurzzeitig über Ventile 12 geschlossen werden.

Alternativ muss die Änderung des physischen Speicherinhalts während des Betriebs des Speichers bei der Auswertung des Ladezustands entsprechend berücksichtigt werden, d.h. Die PCM-Menge dies sich nicht im Speicherbehälter 5 befindet gemessen und berücksichtigt werden.

Abbildung 8 zeigt eine weitere Ausführungsform der Erfindung, bei der die Ladezustandsanzeige mit einer Durchmischungsvorrichtung 1, 16 für das Latentwärmespeichermaterial 3 kombiniert ist. Die Durchmischungsvorrichtung umfasst die Gaspumpe 1 mittels der Gas, insbesondere Luft, in den unteren Bereich des Speicherbehälters 5 eingepumpt wird. Dieses Gas perlt aus einer Ausströmvorrichtung 16 und diese Gas- bzw. Luftblasen 17 durchmischen das zumindest teilweise flüssige Latentwärmespeichermaterial 3. Auf diese Weise werden Entmischungsvorgänge in dem Latentwärmespeichermaterial 3 verhindert oder zumindest reduziert. Hinsichtlich weiterer Details wird auf die DE 102008029072 A1 vollinhaltlich Bezug genommen. Soll der Ladezustand des Latentwärmespeichermaterials 3 bestimmt werden, wird das Ventil 12 geschlossen und es wird über die Gaspumpe 1 und die Ausströmvorrichtung 16 Messgas in den Speicherbehälter 5 eingepumpt, das sich in dem Gasraum 6 sammelt. Auf diese Weise wird die Gaspumpe 1 und die Ausströmvorrichtung 16 sowohl zum Durchmischen des Latentwärmespeichermaterials als auch zur Bestimmung des Ladezustandes des Latentwärmespeichermaterials genutzt.

Vorzugsweise ist die für diese Durchmischungsvorrichtung vorgesehene Gaspumpe gleichzeitig die Messgaspumpe der Gaszufuhr- und Gasabfuhreinrichtung, so dass eine Gaspumpe eingespart wird.

## Patentansprüche

1. Verfahren zur Bestimmung des Ladezustands eines Latentwärmespeichers mit wenigstens einem Speicherbehälter, der bis zu einem bestimmten Grad mit Latentwärmespeichermaterial gefüllt ist, so dass über dem Latentwärmespeichermaterial ein Gasraum verbleibt, bei dem eine definierte Gasmenge (Messgasmenge) dem Speicherbehälter zu- oder aus dem Speicherbehälter abgeführt wird und wobei der Ladezustand des Latentwärmespeichers durch die dadurch hervorgerufene Druckänderung bestimmt wird.

2. Verfahren nach Anspruch 1, **dadurch gekennzeichnet, dass** das Messgas zwischen einem Messgasbehälter und dem wenigstens einen Speicherbehälter hin und her strömt.

3. Verfahren nach einem der vorhergehenden Ansprüche, **gekennzeichnet durch** folgende Verfahrensschritte:
a) Zuführen von Messgas in den Gasraum mittels einer Messgaspumpe und Messen der Zeitspanne bis in dem Gasraum ein vorbestimmter Druck erreicht ist;
b) Berechnen der in Schritt a) in den Gasraum eingebrachten Gasmenge aufgrund der erfassten Zeitspanne und der Fördercharakteristik der Messgaspumpe;
c) Berechnen der Volumenänderung des Gasraums in Relation zu einem vollständig ent- oder beladenen Latentwärmespeicher; und
d) Bestimmung des aktuellen Ladezustandes des Latentwärmespeichers aufgrund der in Schritt c) berechneten Volumenänderung und aufgrund von Kalibrierungsdaten, die den Ladezustand des Latentwärmespeichers als Funktion des Volumens des Gasraums darstellen.

4. Verfahren nach einem der vorhergehenden Ansprüche, **dadurch gekennzeichnet, dass** bei einer Mehrzahl von Speicherbehältern der Ladezustand einzeln in allen Speicherbehältern bestimmt wird.

5. Verfahren nach einem der vorhergehenden Ansprüche 1 bis 3, **dadurch gekennzeichnet, dass** bei einer Mehrzahl von Speicherbehältern der Ladezustand nur in einigen repräsentativen Speicherbehältern bestimmt wird.

6. Verfahren nach einem der vorhergehenden Ansprüche, **dadurch gekennzeichnet, dass** das Messgas Luft ist.

7. Latentwärmespeicher, mit
- wenigstens einem Speicherbehälter, der bis zu einem bestimmten Grad mit Latentwärmespeichermaterial gefüllt ist, so dass über dem Latentwärmespeichermaterial ein Gasraum verbleibt,
wobei das Latentwärmespeichermaterial unter Aufnahme von Wärme von der festen in die flüssige Phase und unter Abgabe von Wärme von der flüssigen in die feste Phase übergeht, und wobei das Latentwärmespeichermaterial während des Phasenübergangs seine Dichte ändert,
- einer Wärmetauschereinrichtung zur Zufuhr von Wärme in den Latentwärmespeicher und zur Abfuhr von Wärme aus dem Latentwärmespeicher, und
- einer Druckerfassungseinrichtung zur Messung des Druckes in dem Gasraum des Speicherbehälters, **gekennzeichnet durch**
eine Gaszufuhr- und Gasabfuhreinrichtung zur Zuführung einer definierten Gasmenge in den Gasraum des Speicherbehälters.

8. Latentwärmspeicher nach Anspruch 7, **dadurch gekennzeichnet, dass** die Gaszufuhr- und Gasabfuhreinrichtung eine Gasausgleichsverbindung mit der Umgebung umfasst.

9. Latentwärmespeicher nach einem der vorhergehenden Ansprüche 7 bis 8,
**dadurch gekennzeichnet, dass** die Gaszufuhr- und Gasabfuhreinrichtung einen Messgasbehälter umfasst.

10. Latentwärmespeicher nach einem der vorhergehenden Ansprüche 7 bis 9,
**dadurch gekennzeichnet, dass** sich das Latentwärmespeichermaterial in einer Mehrzahl von flexiblen Behältnissen befindet.

11. Latentwärmespeicher nach einem der vorhergehenden Ansprüche 7 bis 10, **dadurch gekennzeichnet, dass** das Latentwärmespeichermaterial pumpfähig ist.

12. Latentwärmespeicher nach einem der vorhergehenden Ansprüche 8 bis 11, **dadurch gekennzeichnet, dass** eine Steuer- und Auswerteeinrichtung die Messgaszufuhr in den Gasraum regelt und den durch die Druckerfassungseinrichtung gemessenen Druckanstieg auswertet.

13. Latentwärmespeicher nach einem der vorhergehenden Ansprüche 7 bis 12, **gekennzeichnet durch** eine Durchmischungseinrichtung, die eine im unteren Bereich des Speicherbehälters angeordnete Ausströmvorrichtung und eine mit dieser Ausströmvorrichtung verbundene Gaspumpe umfasst.

14. Latentwärmespeicher nach einem der vorhergehenden Ansprüche 7 bis 13, **dadurch gekennzeichnet, dass** die Gaszufuhr- und Gasabfuhreinrichtung eine Messgaspumpe (1) umfasst.

15. Latentwärmespeicher nach Anspruch 14, **dadurch gekennzeichnet, dass** die Gaspumpe die Messgaspumpe (1) ist.
